Europäisches Patentamt

European Patent Office

Office européen des brevets

(19)

(11) Publication number : **0 481 796 A1**

## (12) EUROPEAN PATENT APPLICATION

(21) Application number : **91309608.7**

(22) Date of filing : **17.10.91**

(51) Int. Cl.⁵ : **F16B 13/12**

(30) Priority : **17.10.90 GB 9022493**

(43) Date of publication of application :
**22.04.92 Bulletin 92/17**

(84) Designated Contracting States :
**AT BE CH DE DK ES FR GB GR IT LI LU NL SE**

(71) Applicant : **Hickman, Paul Jeremy David**
**7 Victoria Cottages, North Street**
**Thame, Oxon OX9 3BH (GB)**

(72) Inventor : **Hickman, Paul Jeremy David**
**7 Victoria Cottages, North Street**
**Thame, Oxon OX9 3BH (GB)**

(74) Representative : **Jennings, Nigel Robin et al**
**KILBURN & STRODE 30 John Street**
**London WC1N 2DD (GB)**

(54) **Fixing assemblies.**

(57) A fixing assembly includes a threaded fixing device including a threaded portion (3) and an unthreaded shank portion (2) whose diameter is greater than that of the threaded portion and a hollow plug (6) of expansible type. The diameter of the shank portion (2) is the same as that of the expansible plug (6) and that of the hole (5) in the workpiece (4). This permits the hole in the object piece (7) to be formed through the hole (5) in the workpiece and the expansible plug (6) subsequently to be inserted into the hole in the object piece through the hole (5) in the workpiece.

Fig.1.

EP 0 481 796 A1

The present invention relates to fixing assemblies of the type comprising a threaded fixing device, such as a screw, in combination with a hollow plug of expansible type which is intended to be received in a wall or the like and into which the threaded fixing device is screwed to expand it into engagement with the surface of the hole. The invention is concerned with that type of fixing assembly which includes a threaded fixing device and a hollow plug of expansible type, the fixing device including a threaded portion and an unthreaded shank portion whose diameter is greater than that of the threaded portion. The invention also relates to a method of fixing a workpiece to an object piece using such a fixing assembly.

Conventionally, when it is desired to fix a subject piece, such as a cupboard, bracket or the like (referred to herein as a workpiece), to an object piece, such as a wall, a screw is used in conjunction with a hollow expansible plug of proprietary type, such as that sold under the Trade Mark RAWLPLUG. A hole, whose diameter is substantially the same as the unexpanded diameter of the plug, is formed in the object piece, the plug inserted into it and a screw is passed through a hole in the workpiece and screwed into the plug thereby expanding the latter into firm engagement with the surface of the hole and connecting the workpiece to the object piece.

Whilst the diameter of the hole which is drilled in the object piece must be large enough to receive the expansible plug, the hole formed in the workpiece is generally smaller and related to the size of the screw. This means that when, for instance, fastening a cupboard to a wall, it is generally necessary to hold the cupboard against the wall, mark the positions on the wall where holes are to be drilled, remove the cupboard, drill the holes in the wall, insert the expansible plugs, replace the cupboard and then screw the screws through the holes. This method is time-consuming and troublesome in that it necessitates placing the cupboard against the wall on two separate occasions and has the substantial disadvantage that the holes in the wall are frequently drilled at slightly incorrect positions due to "wandering" of the drill over the surface of the wall when drilling commences which means that when the screws are placed through the holes in the cupboard they do not all match up positionally with the holes in the wall.

These problems could perhaps in theory be overcome by making the holes in the cupboard somewhat oversized which would permit the holes in the wall to be drilled through the holes in the cupboard and the expansible fixing plugs to be inserted into the holes in the wall through the holes in the cupboard. However, if this were done the holes in the cupboard would have to be at least as large as the diameter of the expansible plugs and this diameter is inherently greater than the diameter of the screws which means that the screws are a loose fit in the holes in the cupboard.

This means in turn that when the screws have been positioned and the cupboard released it moves downwardly a short distance until the screws contact the upper edge of the holes in the cupboard. Such movement may often not be of great consequence with cupboards but is quite unacceptable for those articles for which precise positional accuracy is required.

A further problem arises using conventional fixing assemblies if a cupboard or the like is already connected to a wall or the like and it is determined that the connection is too weak, either because too few fixings were used originally or because one or more of the original fixings have become loose. In this event it is necessary to remove all the existing fixings before commencing the laborious procedure described above and then fitting the new fixings and replacing the old fixings. If one were to drill further holes into the wall through the cupboard and insert resilient plugs into the holes in the wall through the holes in the cupboard, the fact that the holes in the cupboard are necessarily larger than the screws, as explained above, will mean that the new fixings will in no way increase the strength of the connection of the cupboard to the wall due to the fact that movement of the cupboard relative to the new fixings will be prevented by the old fixings.

GB-A-2118660 discloses a fixing assembly of the type referred to above comprising a screw and a hollow expansible plug. The screw has a threaded portion and an unthreaded shank portion which is situated between the threaded portion and the screw head and whose diameter is greater than that of the threaded portion. The shoulder between the shank portion and the threaded portion forms an abutment which engages the wall or the plug when the screw is screwed into the plug and thus acts as an end stop. The shank portion thus projects from the wall to form a so-called "stand-off" which can be used to support a cupboard back or picture. In all the constructions disclosed in this prior publication the shank portion is of smaller or larger diameter than the expansible plug and thus none of these constructions solves the problems referred to above. In that construction in which the shank portion is smaller than the expansible plug it is either not possible to pass the plug through the hole in the workpiece or the shank portion will be bigger than the hole in the workpiece which means that precise positional location of the workpiece is not possible. In those constructions in which the shank portion is larger than the expansible plug, the holes in the workpiece and the object piece can not be drilled at the same time. In both cases there is the additional disadvantage that the length of the "stand-off" and thus the thickness of the workpiece can be secured is dictated by the length of the shaft portions which means that a range of screws is required with differing length of shaft portions to enable workpieces of a range of thicknesses to be fastened.

It is the object of the invention to provide a fixing assembly of the type referred to above and a method of using it which overcomes the problems of the prior art and which, in particular, permits a workpiece to be fastened to a wall or the like in a precisely determined position and the expansible plug to be passed through the hole in the workpiece without having to place the workpiece against the wall more than once, e.g. by forming the holes in the wall and the workpiece at the same time. It is a further object of the invention to provide such a fixing assembly which is capable of reliably fixing a number of different workpieces of varying thickness.

According to the present invention a fixing assembly of the type referred to above is characterised in that the diameter of the shank portion is the same as that of the expansible plug. This apparently minor change to known fixing assemblies is in fact of major significance and enables all the objects referred to above to be achieved. Thus when fixing a workpiece, such as a cupboard, to an object piece, such as a wall, the hole in the wall may be formed through a hole in the cupboard and the expansible plug inserted into the hole in the wall through the hole in the cupboard. The threaded fixing device is then screwed into position and the shank portion is received in the hole in the workpiece as a snug fit which means that no movement of the cupboard relative to the wall can occur when the cupboard is subsequently released. Due to the fact that the hole in the wall is formed through a hole in the cupboard and the expansible plug is subsequently inserted into the wall through the hole in the cupboard, the cupboard need be placed against the wall only once and the entire fixing procedure completed in a single operation without removing the cupboard from the wall and without there being any necessity to make any marks on the wall. The hole in the cupboard can be preformed but it can equally be formed at the same time as the hole in the wall and this does of course inherently result in the hole in the cupboard and the hole in the wall having the same diameter which is of course the same as that of the expansible plug.

If the length of the shank portion is less than that of the hole in the workpiece the head of the screw engages the surface of the workpiece before the leading end of the shank portion has reached the surface of the wall but this is of no consequence and the workpiece is still reliably fixed in position. If the length of the shank portion is greater than that of the hole in the workpiece, the threaded fixing device is screwed in again until its head contacts the surface of the workpiece and this will inherently result in the leading end of the shank portion being partially received in the hole in the wall. Accordingly, the fixing assembly of the present invention enables a range of workpieces of differing thicknesses to be fixed to an object piece with the same threaded fixing device, that is to say with fixing devices whose shank portions are of the same length.

The present invention also embraces a method of fixing a workpiece to an object piece, such as a wall, of the type including forming a hole in the object piece, inserting a hollow plug of expansible type into the hole, passing a threaded fixing device through a hole in the workpiece and screwing it into the expansible plug, the threaded fixing device including a threaded portion and an unthreaded shank portion whose diameter is greater than that of the threaded portion, and is characterised in that the hole in the object piece is formed through a hole in the workpiece, that the diameter of the hole in the workpiece is equal to that of the expansible plug and to that of the shank portion and that the expansible plug is passed into the hole in the object piece through the hole in the workpiece.

Further features and details of the invention will be apparent from the following description of one specific embodiment which is given by way of example with reference to the accompanying diagrammatic drawings, in which:

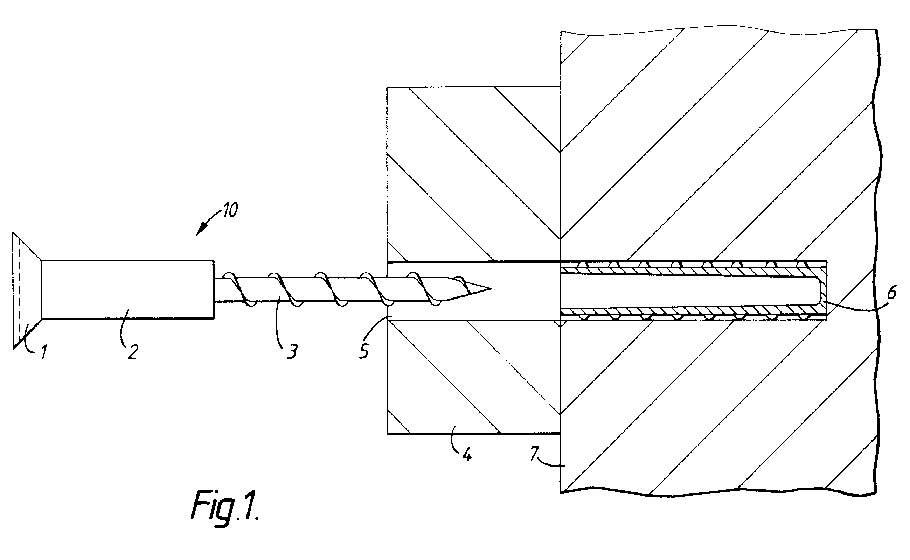

Figure 1 is a side elevation, partly in section, of a fixing assembly in accordance with the invention in conjunction with a workpiece which is to be fastened to a wall; and

Figure 2 is a similar view of a number of workpieces fastened to a wall by means of respective fixing assemblies.

The fixing assembly comprises a threaded fastener 10, which will be referred to as a screw, and an expansible hollow plug. The screw has a head 1 affording a conventional screw slot and a threaded portion 3, between which is an unthreaded shank portion 2 whose diameter is greater than that of the threaded portion 3, that is to say greater than the maximum diameter of the thread on the threaded portion. The expansible plug 6 may be of a type known per se and may be of plastics material or metal. It has a hollow interior and in this case has small protuberances on its outer surface. Its external diameter, that is to say the diameter of the smallest hole into which is can be fitted without distorting it, is equal to the diameter of the shank portion 2.

In use, a workpiece 4, such as a cupboard, which is to be fastened to an object piece, such as a wall 7, is held against the wall. If the cupboard already has fixing holes 5 formed in it, their diameter is the same as that of the expansible plugs 6 to be used. In this event holes are drilled in the wall through the holes 5 without removing the cupboard. If the cupboard has no fixing holes in it, holes are drilled through the cupboard and into the wall in a single operation. The diameter of these holes is equal to that of the expansible plugs to be used. Expansible plugs are then passed through the holes 5 in the cupboard into the holes in the wall and the fixing screws are then screwed into the plugs 6. As the threaded portion 3 of each screw engages the associated plug, the latter is expanded outwardly into firm contact with the surface of the associated hole in the wall, thereby retaining it firmly in position. The shank portion 2 is received in the hole 5 in the cupboard and, due to the fact that their diameters are the same, no movement of the cupboard occurs when the fixing process is completed and the cupboard released.

In the illustrated embodiment the length of the shank portion 2 is equal to that of the hole 5. This is, however, not essential. If the length of the shank portion is less than that of the hole 5, the shoulder at the leading end of the shank portion terminates short of the end of the hole in the wall but the head of the screw engages the surface of the cupboard and the cupboard is still held reliably and securely in position. If the length of the shank portion is greater than that of the hole 5 it is merely necessary to recess the plug 6 within the hole in the wall. As the screw is tightened, the leading end of the shank portion enters the hole in the wall. It is therefore a substantial advantage of the invention that a range of only, say, two or three different screws, the length of whose shank portions differ from one another, is necessary in order to be able to fasten workpieces of all likely anticipated thicknesses.

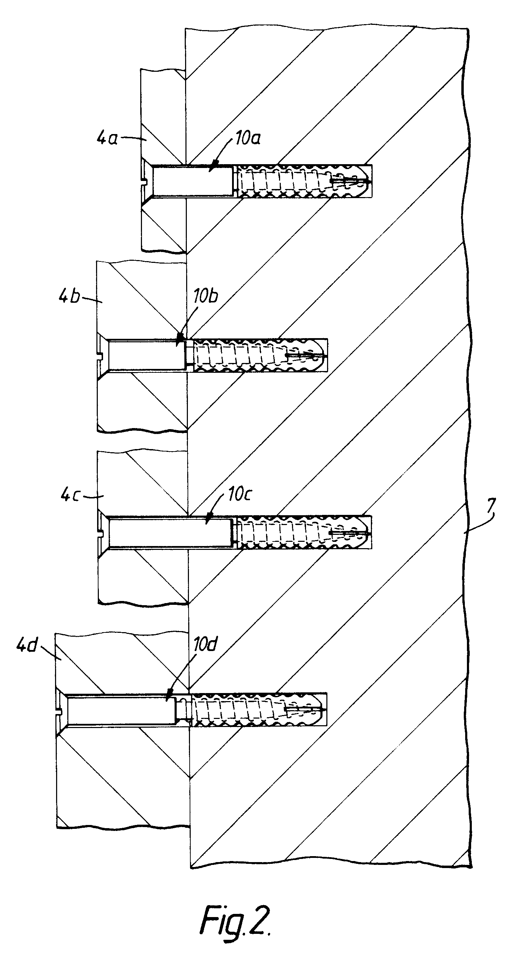

This advantage is graphically illustrated in Figure 2, which shows four separate workpieces secured to a wall 7 by respective fixing assemblies. The uppermost workpiece 4a is secured by a screw 10a whose shank is longer than the thickness of the workpiece. The shank thus extends into the hole in the wall and the expansible plug is recessed into this hole. This may be conveniently achieved by inserting the plug into the hole in the wall in the conventional manner, that is to say with its trailing end substantially flush with the surface of the wall and then partially screwing the screw 10a into it. The screw is then pushed a short distance into the hole, e.g. by hammering, and this inherently also advances the plug into the hole. The tightening of the screw is then completed. The workpiece 4b is thicker than the workpiece 4a but its fixing screw 10b is of the same dimensions as the screw 10a. In this case the length of the shank is less than the thickness of the workpiece and the shank thus does not extend through the entire length of the hole in the workpiece. The workpiece 4c is of the same thickness as the workpiece 4b but its fixing screw 10c has a larger shank which thus extends into the hole in the wall in a manner similar to the screw 10a. Finally, the lowermost workpiece 4d is thicker than the workpiece 4c but its fixing screw 10d is the same as the screw 10c which means that its shank does not extend through the entire thickness of the workpiece. It will thus be seen that a fixing assembly in accordance with the invention may be used to fasten workpieces of varying thickness and that workpieces of the same thickness may be fastened with screws whose shank length varies.

It will be appreciated that numerous modifications may be effected to the fixing assembly described above. Thus the length of the threaded portion 3 and of the shank portion 2 and the ratio of these two lengths may be varied in accordance with requirements. The expansible plug 6 may be of any of the large number of types which are commercially available. Whilst the head 1 of the screw has been illustrated as being of frusto-conical slotted (countersunk) type, it may be of flat, hexagonal or any other suitable type. Whilst the shank 2 of the screw in the specific embodiment is solid and of regular circular cross-sectiom, this is not essential and it could be hollow and/or have a shape other than circular, e.g. cruciform. All that is essential is that the outer extremities of the shank lie on a hypothetical circle and in this event it is the diameter of this circle which is the effective diameter of the shank.

## Claims

1. A fixing assembly including a threaded fixing device and a hollow plug of expansible type, the fixing device including a threaded portion and an unthreaded shank portion whose diameter is greater than that of the threaded portion characterised in that the diameter of the shank portion (2) is the same as that of the expansible plug (6).

2. A method of fixing a workpiece to an object piece, such as a wall, including forming a hole in the object piece, inserting a hollow plug of expansible type into the hole, passing a threaded fixing device through a hole in the workpiece and screwing it into the expansible plug, the threaded fixing device including a threaded portion and an unthreaded shank portion whose diameter is greater than that of the threaded portion, characterised in that the hole in the object piece (7) is formed through a hole (5) in the workpiece (4), that the diameter of the hole (5) in the workpiece (4) is equal to that of the expansible plug (6) and to that of the shank portion (2) and that the expansible plug (6) is passed into the hole in the object piece (7) through the hole (5) in the workpiece (4).

3. A method as claimed in claim 2 characterised in that the hole (5) in the workpiece (4) and the hole in the object piece (7) are formed in a single drilling operation.

4. A method as claimed in claim 2 or claim 3 characterised in that the length of the shank portion (2) is greater than that of the hole (5) in the workpiece (4), the expansible plug (6) is recessed into the hole in the object piece (7) and that when the fixing device is screwed into the expansible plug (6) the leading end of the shank portion (2) passes into the hole in the object piece (7).

*Fig.1.*

Fig.2.

## EUROPEAN SEARCH REPORT

**European Patent Office**

Application Number

EP    91 30 9608

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2701568 (FISCHER)<br>* claim 1 *<br>* page 2, paragraph 2 - page 3, paragraph 2 *<br>* page 5, paragraph 1 *<br>* figure 1 *<br>--- | 1-3 | F16B13/12 |
| X | DE-A-2728449 (GEIGER)<br>* claim 3 *<br>* page 5, paragraphs 2 - 3 *<br>* figure 1 *<br>--- | 1-3 | |
| X | FR-A-2218495 (POLOS)<br>* page 1, line 7 - page 2, line 34 *<br>* page 4, line 26 - page 6, line 1 *<br>* figures 6, 7 *<br>----- | 1, 2, 4 | |
| | | | TECHNICAL FIELDS SEARCHED (Int. Cl.5)<br><br>F16B |

The present search report has been drawn up for all claims

| Place of search | Date of completion of the search | Examiner |
|---|---|---|
| BERLIN | 17 JANUARY 1992 | RICHARDS T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)